# EUROPEAN PATENT APPLICATION

(11) **EP 1 964 732 A1**
(43) Date of publication of application: **03.09.2008**
(21) Application number: 07103117.3
(22) Date of filing: 27.02.2007
(51) Int. Cl.: B60S 1/38

(54) **Windscreen wiper device**

(71) Applicant: Federal-Mogul S.A., 6790 Aubange (BE)
(72) Inventor: Boland, Xavier, 6700, Arlon (BE)
(74) Representative: Hooiveld, Arjen Jan Winfried

(57) **Abstract**

A windscreen wiper device (1) comprising an elastic, elongated carrier element, as well as an elongated wiper blade, which can be placed in abutment with a windscreen to be wiped, which wiper blade includes at least one longitudinal groove (5), in which groove a longitudinal strip (6) of the carrier element is disposed, wherein ends of said longitudinal strip (6) are connected to a respective connecting piece (7), which windscreen wiper device comprises a connecting device for an oscillating arm, with the special feature that said wiper blade comprises an elongated upper holding part (3) and an elongated lower wiping part (4) of a flexible material, wherein said holding part (3) holds said wiping part (4), and wherein said holding part comprises downwardly extending arms (12), seen in cross-section, for pivotally engaging said wiping part (4).

## Description

The present invention relates to a windscreen wiper device comprising an elastic, elongated carrier element, as well as an elongated wiper blade, which can be placed in abutment with a windscreen to be wiped, which wiper blade includes at least one longitudinal groove, in which groove a longitudinal strip of the carrier element is disposed, wherein ends of said longitudinal strip are connected to a respective connecting piece, which windscreen wiper device comprises a connecting device for an oscillating arm.

Such a windscreen wiper device is known from international (PCT-) patent publication no. WO 02/090155 in the name of the same Applicant. The prior art windscreen wiper device is in particular designed as a "yokeless" wiper device, wherein use is no longer made of several yokes pivotally connected to each other, but wherein the wiper blade is biassed by the carrier element, as a result of which it exhibits a specific curvature. In this known windscreen wiper device said wiper blade includes two opposing longitudinal grooves on its longitudinal sides, in which grooves spaced-apart longitudinal strips of the carrier element are disposed. Neighbouring ends of said longitudinal strips are interconnected by said respective connecting piece.
A sometimes felt disadvantage of the windscreen wiper device as described in the above international (PCT-) patent publication is that a rubber wiping lip of said wiper blade might show a permanent deformation after several months of use, as said wiping lip has to make many oscillating movements during use, wherein said wiping lip has to bend severely. Bending the rubber of said wiping lip many times back and forth might lead to a permanent deformation of said rubber and thus to deteriorated wiping properties, with all negative consequences involved.

It is an object of the invention to improve the prior art, that is to improve a windscreen wiper device known from the above international (PCT-) patent publication, wherein a permanent deformation of said wiping lip is avoided at all times.

In order to accomplish that objective, a windscreen wiper device of the kind referred to in the introduction according to the invention is characterized in that said wiper blade comprises an elongated upper holding part and an elongated lower wiping part of a flexible material, wherein said holding part holds said wiping part, and wherein said holding part comprises downwardly extending arms, seen in cross-section, for pivotally engaging said wiping part. In other words, a mechanical articulation is realized between said holding part and said wiping part, wherein said holding part holds said wiping part allowing said wiping part to make pivotal or hingeable movements relative to said holding part during use. In use said pivotal movements of said wiping part correspond to oscillatory movements of said oscillating arm. Due to said mechanical articulation said wiping part will not have to bend to follow the oscillatory movements of said oscillating arm, so that a permanent deformation of said wiping part as a result of stress in the rubber thereof is avoided.

It is noted that the invention is not restricted to use with passenger cars, but it can also be used with trains and other fast vehicles.

In one preferred embodiment of a windscreen wiper device in accordance with the invention said wiping part comprises a wiping lip, a neck extending from said wiping lip, as well as an enlarged head extending from said neck, wherein said enlarged head is mounted into a hollow chamber defined by said arms of said holding part. Preferably, said enlarged head has a circular, elliptical, square, rectangular, rhomboid or heart-shaped cross-section. Said wiping lip is placed in abutment with a windscreen to be wiped. Said wiping lip, said neck and said enlarged head particularly are in one piece and extend in longitudinal direction along the entire length of the wiper blade.

In another preferred embodiment of a windscreen wiper device according to the invention said arms of said holding part comprise inwardly extending end parts, wherein said neck is located at least partly between said end parts, and wherein the enlarged head is located above said end parts. In other words, said enlarged head is confined in said hollow chamber, wherein said hook-shaped end parts further retain said wiping part onto said holding part. Particularly, said hollow chamber comprises a lubricant in order to allow smooth pivotal movements of said wiping part without wear.

In another preferred embodiment of a windscreen wiper device in accordance with the invention said wiping part includes opposing longitudinal grooves on its longitudinal sides, in which grooves spaced-apart longitudinal strips of the carrier element are disposed. In that case said respective connecting piece interconnects neighbouring ends of said longitudinal strips. In the alternative said at least one longitudinal groove is provided in said holding part. In the latter case said groove particularly forms a central groove having a closed circumference.

In another preferred embodiment of a windscreen wiper device according to the invention said holding part is provided with a spoiler at a side thereof facing away from said wiping part. Said spoiler is preferably in one piece with said holding part. In another preferred embodiment said spoiler is entirely detachably connected to said holding part.

In another preferred embodiment of a windscreen wiper device in accordance with the invention said holding part and said wiping part extend in longitudinal direction along the entire length of said wiper blade. In other words, said wiper blade consists of two mutually cooperating constructional elements, namely said holding part and said wiping part. Said parts are preferably slidably connected to each other, wherein said enlarged head of said wiping part is slidably mounted into said hollow chamber of said holding part. Said hollow chamber extends along the entire length of said wiper blade so as to form a channel with two open ends. One of said open ends of said channel forms an entrance through which said wiping part as a separate construction element can be slid by hand into said channel until said wiping part is finally retained onto said holding part (the first position). Said open end also acts as an exit through which said wiping part can be slid by hand from the first position until said wiping part as a separate "loose" construction element can be replaced or repaired (the second position).

In another preferred embodiment of a windscreen wiper device according to the invention said wiping part is at least substantially made of an elastomeric material, such as rubber, wherein said holding part is at least substantially made of a plastic material.

The invention will now be explained in more detail with reference to figures illustrated in a drawing, wherein:
- figure 1 shows a perspective view of a windscreen wiper device according to a preferred embodiment of the invention;
- figures 2 and 3 are a cross-section of the windscreen wiper device of figure 1 at the location of a connecting device for an oscillating arm and at the location of a connecting piece for a longitudinal strip of a carrier element, respectively;
- figures 4 through 10 correspond to figure 2, but referring to different embodiments of a holding part and a wiping part of a wiper blade of the windscreen wiper device of figure 1;
- figure 11 shows a perspective view of a windscreen wiper device according to another preferred embodiment of the invention;
- figures 12 and 13 are a cross-section of the windscreen wiper device of figure 11 at the location of a connecting device for an oscillating arm and at the location of a connecting piece for a longitudinal strip of a carrier element, respectively; and
- figures 14 and 15 correspond to figures 2 and 3 on the one hand and to figures 12 and 13 on the other hand, but relating to yet another preferred embodiment of the invention.

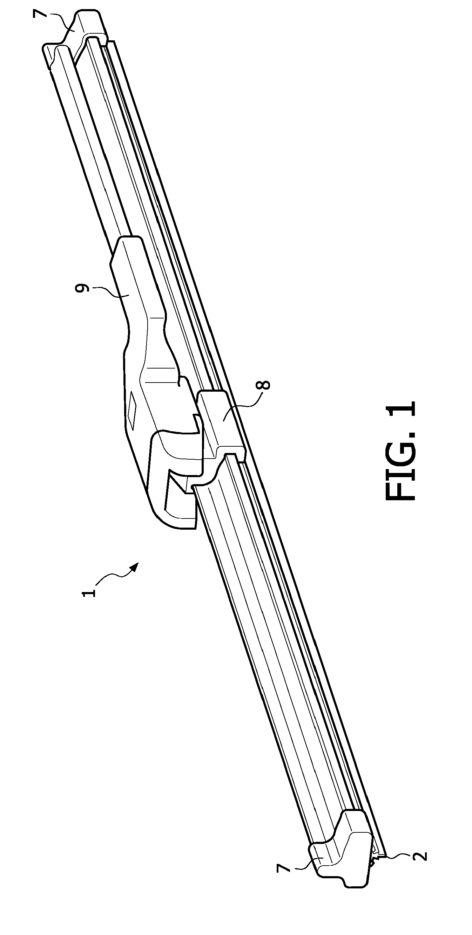

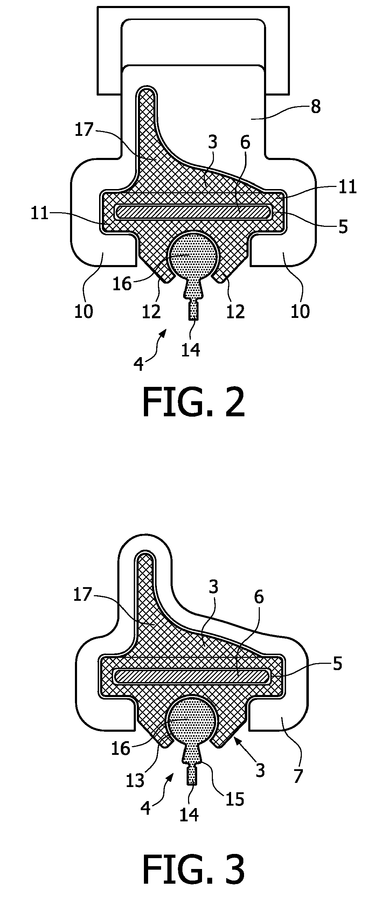

Figure 1 shows a preferred variant of a windscreen wiper device 1 according to the invention. Said windscreen wiper device 1 is built up of a wiper blade 2 consisting of a plastic elongated upper holding part 3 and an elastomeric elongated lower wiping part 4, both extending in longitudinal direction along the entire length of said wiper blade 2. In the holding part 3 a central longitudinal groove 5 is formed, in which a longitudinal strip 6 made of spring band steel is fitted (figures 2 and 3). Said strip 6 forms a flexible carrier element for the rubber wiper blade 2, as it were, which is thus biased in a curved position (the curvature in operative position being that of a windscreen to be wiped). Outer ends of said strip 6 are connected on either side of the windscreen wiper device 1 to connecting pieces 7 functioning as clamping members. In this embodiment, the connecting pieces 7 are separate constructional elements, which may be form-locked as well as force-locked to the outer ends of said strip 6. In another preferred variant, said connecting pieces 7 are in one piece with the strip 6 made of spring band steel.

The windscreen wiper device 1 is furthermore built up of a connecting device 8 of plastic material for an oscillating wiper arm 9. Said connecting device 8 comprises clamping members 10 that are integral therewith, which engage round longitudinal sides 11 of the holding part 3 that face away from each other, as a result of which the connecting device 8 is firmly attached to the unit consisting of the holding part 3 and the strip 6. Likewise, the connecting pieces 7 comprise similar clamping members (figure 3). The oscillating wiper arm 9 is pivotally connected to the connecting device 8 about a pivot axis near one end thereof.

As can be seen from figures 2 and 3, said holding part 3 is provided with downwardly extending arms 12 in one piece therewith, seen in cross-section, thus defining a hollow chamber or space 13, again seen in cross-section. Said hollow chamber 13 extends in longitudinal direction along the entire length of said wiper blade 2, so as to form a channel with two open outer ends. Again referring to figures 2 and 3, said wiping part 4 consists of a wiping lip 14, a neck 15 extending from said wiping lip 14, as well as an enlarged head 16 extending from said neck 15 and having a circular cross-section. Said parts 3,4 are slidably connected to each other, wherein said enlarged head 16 of said wiping part 4 is slidably mounted into said hollow channel of said holding part 3. One of said open ends of said channel forms an entrance through which said wiping part 4 as a separate construction element can be slid by hand into said channel until said wiping part 4 is finally retained onto said holding part 3 (the first or holding position). Said open end also acts as an exit through which said wiping part 4 can be slid by hand from the first position until said wiping part 4 as a separate "loose" construction element can be replaced or repaired (the second position). The arms 12 of said holding part 3 pivotally engage the enlarged head 16 of said wiping part 4, so as to allow a pivotal or hingeable movement of said wiping part 4 when the oscillating wiper arm 9 attached to said holding part 3 makes a corresponding oscillatory movement.

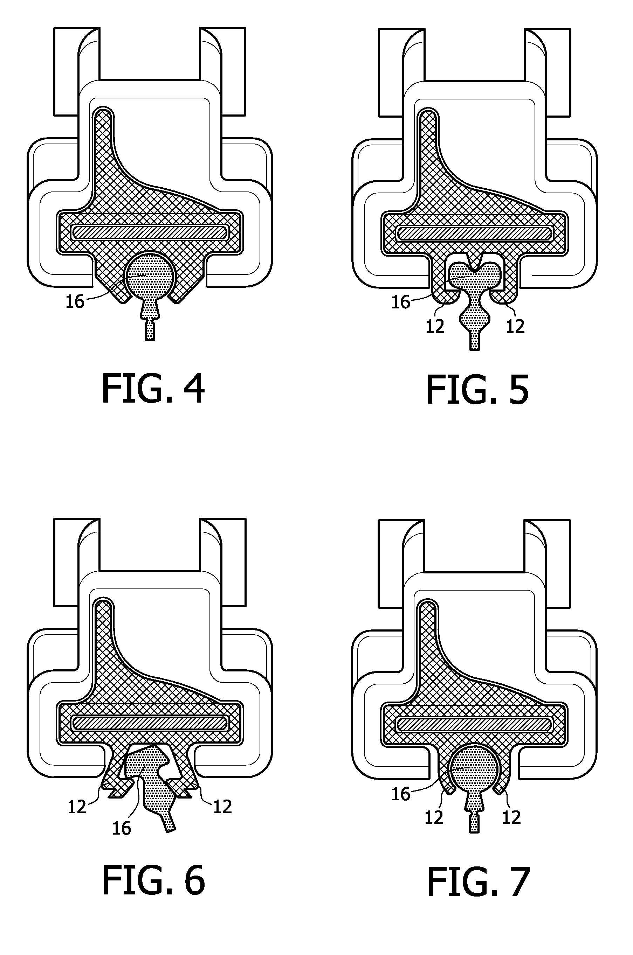

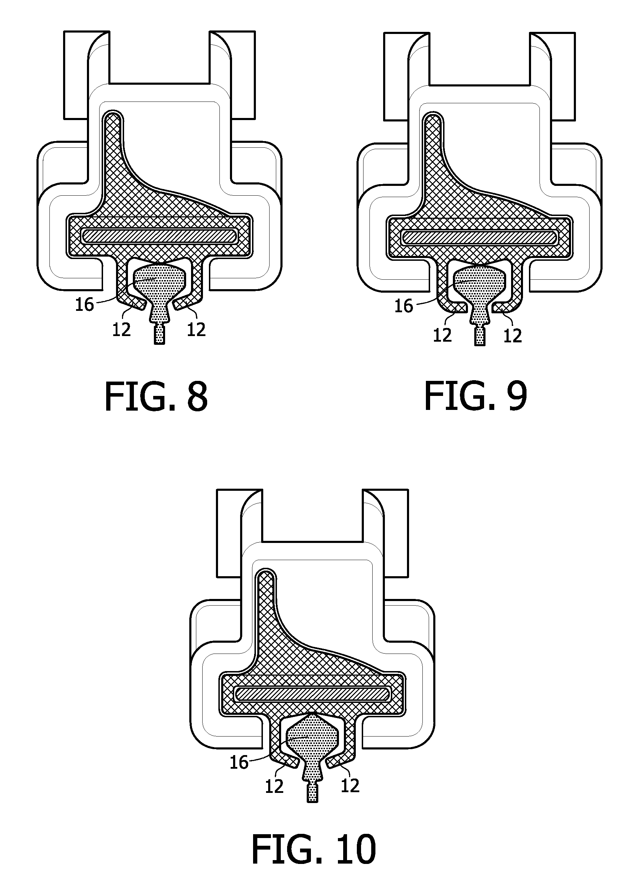

Figures 4 through 10 correspond to figure 2, but referring to different embodiments of said holding part 3 and said wiping part 4 of said wiper blade 2 of the windscreen wiper device 1 of figure 1, wherein corresponding parts have been designated with the same reference numerals. Figures 4 through 10 show circular cross-section of said enlarged head 16 (figures 4 and 7), a heart-shaped cross-section thereof (figure 5), an elliptical cross-section thereof (figures 8 and 9), a rhomboid cross-section thereof (figure 10), as well as a cross-section thereof in the form of a parallelogram (figure 6). Each time the arms 12 engage said wiping part 4, such that the latter is able to move in correspondence with the oscillatory movements of the oscillating wiper arms 9 due to the mechanical articulation between the parts 3,4.

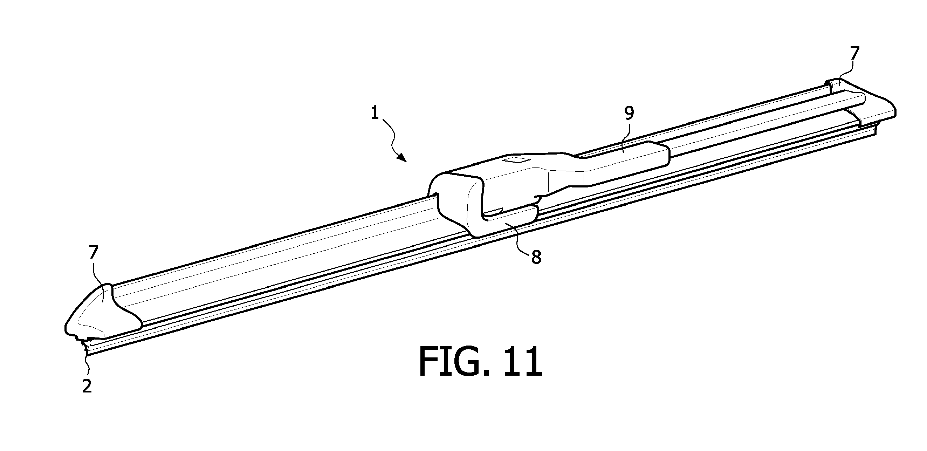

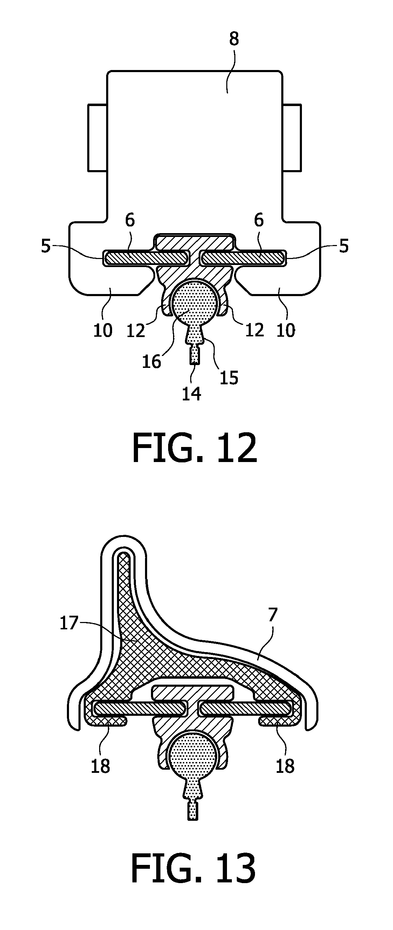

Figure 11 relates to a perspective view of a windscreen wiper device according to another preferred embodiment of the invention, whereas figures 12 and 13 are a cross-section of the windscreen wiper device of figure 11 at the location of a connecting device for an oscillating arm and at the location of a connecting piece for a longitudinal strip of a carrier element, respectively. Parts that correspond to parts of figures 1 through 10 are designated with the same reference numerals.

As can be seen from figures 12 and 13, said wiper blade 2 is again built up of said plastic holding part 3 and said elastomeric wiping part 4, with the difference that in the longitudinal sides of said holding part 3 opposing longitudinal grooves 5 are formed, in which longitudinal strips 6 made of spring band steel are fitted. Said connecting device 8 comprises said integral clamping members 10 engaging round longitudinal sides of said strips 6 that face away from each other, as a result of which the connecting device 8 is firmly attached to the unit consisting of the holding part 3 and the strip 6. Said strips 6 also form a flexible carrier element for the rubber wiper blade 2, as it were, which is thus biassed in a curved position (the curvature in operative position being that of a windscreen to be wiped). Neighbouring ends of said strips 6 are interconnected on either side of the windscreen wiper device 1 by means of connecting pieces 7 functioning as clamping members. In this embodiment, the connecting pieces 7 are separate constructional elements, which may be form-locked as well as force-locked to the ends of said strips 6. In another preferred variant, said connecting pieces 7 are in one piece with the strips 6 made of spring band steel. In the latter case said connecting pieces 7 form transverse bridges for the strips 6, as it were. The mutual cooperation between the arms 12 of said holding part 3 and the enlarged head 16 of said wiping part 14 in figures 12 and 13 is similar to the one of figure 7, both from a mechanical and functional point of view.

In the embodiments of figures 1 through 10 on the one hand and figures 11 through 13 on the other hand a spoiler or air deflector 17 is present either located on a side of said holding part 3 which faces away from said wiping part 4, wherein said spoiler 17 is in one piece with said holding part 3 (figures 1 through 10) or attached as a detachable separate construction element to said strips 6, wherein said spoiler 17 has integral edges 18 extending inwardly and around said strips 6 (figures 11 through 13). In both embodiments a lubricant can be present in said channel.

Although not depicted in the figures, it will be clear for a person skilled in the art that the oscillating wiper arm 9 is connected to a mounting head fixed for rotation to a shaft driven by a small motor. In use, the shaft rotates alternately in a clockwise and in a counter-clockwise sense carrying the mounting head into rotation also, which in turn draws the oscillating wiper arm 9 into rotation and by means of the connecting device 8 moves the wiper blade 2.

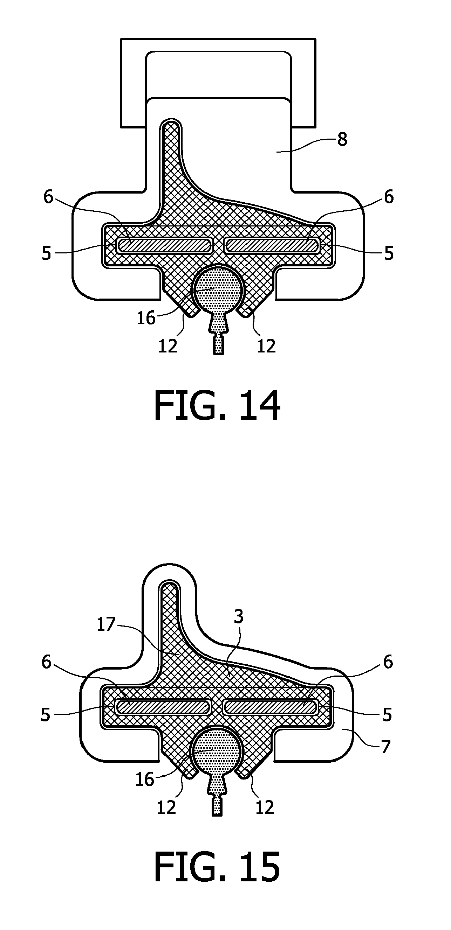

The invention is not restricted to the embodiments shown, but also extends to other preferred variants falling within the scope of the appended claims. For example, a skilled person would easily understand that the central longitudinal strip 6 of figures 2 and 3 could well be replaced by two longitudinal strips 6 located in correspondingly shaped grooves 5 in said holding part 3. Reference is made to figures 14 and 15, wherein corresponding parts are designated by the same reference numerals.

## Claims

1. A windscreen wiper device comprising an elastic, elongated carrier element, as well as an elongated wiper blade, which can be placed in abutment with a windscreen to be wiped, which wiper blade includes at least one longitudinal groove, in which groove a longitudinal strip of the carrier element is disposed, wherein ends of said longitudinal strip are connected to a respective connecting piece, which windscreen wiper device comprises a connecting device for an oscillating arm, **characterized in that** said wiper blade comprises an elongated upper holding part and an elongated lower wiping part of a flexible material, wherein said holding part holds said wiping part, and wherein said holding part comprises downwardly extending arms, seen in cross-section, for pivotally engaging said wiping part.

2. A windscreen wiper device according to claim 1, wherein said wiping part comprises a wiping lip, a neck extending from said wiping lip, as well as an enlarged head extending from said neck, and wherein said enlarged head is mounted into a hollow chamber defined by said arms of said holding part.

3. A windscreen wiper device according to claim 2, wherein said enlarged head has a circular, elliptical, square, rectangular, rhomboid or heart-shaped cross-section.

4. A windscreen wiper device according to claim 2 or 3, wherein said arms of said holding part comprise inwardly extending end parts, and wherein said neck is located at least partly between said end parts and the enlarged head is located above said end parts.

5. A windscreen wiper device according to claim 2, 3 or 4, wherein said hollow chamber comprises a lubricant.

6. A windscreen wiper device according to any of the preceding claims 1 through 5, wherein said wiping part includes opposing longitudinal grooves on its longitudinal sides, in which grooves spaced-apart longitudinal strips of the carrier element are disposed.

7. A windscreen wiper device according to claim 6, wherein said respective connecting piece interconnects neighbouring ends of said longitudinal strips.

8. A windscreen wiper device according to any of the preceding claims 1 through 5, wherein said at least one longitudinal groove is provided in said holding part.

9. A windscreen wiper device according to claim 8, wherein said at least one longitudinal groove has a closed circumference.

10. A windscreen wiper device according to any of the preceding claims 1 through 9, wherein said holding part is provided with a spoiler at a side thereof facing away from said wiping part.

11. A windscreen wiper device according to claim 10, wherein said spoiler is in one piece with said holding part.

12. A windscreen wiper device according to claim 10, wherein said spoiler is detachably connected to said holding part.

13. A windscreen wiper device according to any of the preceding claims 1 through 12, wherein said holding part and said wiping part extend in longitudinal direction along the entire length of said wiper blade.

14. A windscreen wiper device according to any of the preceding claims 1 through 13, wherein said wiping part is at least substantially made of an elastomeric material, such as rubber.

15. A windscreen wiper device according to any of the preceding claims 1 through 14, wherein said holding part is at least substantially made of a plastic material.
